# EUROPEAN PATENT SPECIFICATION

(11) **EP 2 871 747 B1**
(45) Date of publication and mention of the grant of the patent: **02.10.2019**
(21) Application number: 13812460.7
(22) Date of filing: 20.05.2013
(51) Int. Cl.: H02J 7/00, H02J 7/04

(54) **CHARGING APPARATUS**
LADEGERÄT
APPAREIL DE CHARGE

(30) Priority: 03.07.2012 JP 2012149577
(43) Date of publication of application: 13.05.2015
(73) Proprietor: Panasonic Intellectual Property Management Co., Ltd., Osaka-shi, Osaka 540-6207 (JP)
(72) Inventor: NISHIMURA, Shinji, Osaka-shi Osaka 540-6207 (JP); IBUKI, Yasuo, Osaka-shi Osaka 540-6207 Japan (JP); ASAKAWA, Koji, Osaka-shi Osaka 540-6207 Japan (JP)
(74) Representative: Grünecker Patent- und Rechtsanwälte PartG mbB
(86) International application number: PCT/JP2013/003187
(87) International publication number: WO 2014/006810

(56) References cited:
- EP-A1- 2 139 116
- JP-A- H08 237 880
- JP-A- 2001 136 670
- JP-A- 2008 301 638
- JP-A- 2011 211 846
- US-A- 5 675 235
- US-A1- 2008 297 118
- US-A1- 2009 256 529

## Description

The present invention relates to a charging apparatus that charges a storage battery of an electric device or the like.

A known charging apparatus includes a large-current charging circuit, which charges a storage battery with a large current, and a small-current charging circuit, which charges a storage battery with a small current (e.g., refer to patent documents 1 to 5). A charging apparatus of patent document 1 includes two independent transformers, each including two types of secondary coils to selectively generate large and small charging currents. Subsequent stages of the two transformers include a large number of switching elements, which switches charging lines so that the charging current supplied to a storage battery can be selectively switched between large and small currents.
Patent Document 1: Japanese Laid-Open Patent Publication No. 56-53550
Patent Document 2: US 2008/297118 A1
Patent Document 3 : US 5 675 235 A
Patent Document 4 : EP 2 139 116 A1
Patent Document 5 : US 2009/256529 A1

However, such a charging apparatus that is described in patent document 1 includes two independent transformers, each including two types of secondary coils. This results in the two transformers having complicated and enlarged structures, which, in turn, results in the charging apparatus having a completed and enlarged structure. The arrangement described in patent document 2 is a charging apparatus comprising a large-current charging circuit and a low-current charging circuit, which are selectively connected to the battery terminals by means of a switching element that is controlled according to a duty cycle.

It is an object of the present invention to provide a charging apparatus that performs charging selectively with a large current and a small current, while allowing for reduction in size and a simplified structure.

This is achieved by the features of independent claim 1.

The present invention provides a charging apparatus that performs charging selectively with a large current and a small current, while allowing for reduction in size and a simplified structure.
Fig. 1 is a circuit diagram showing one embodiment of a charging apparatus.
Fig. 2 is a circuit diagram showing one example of a charging apparatus.

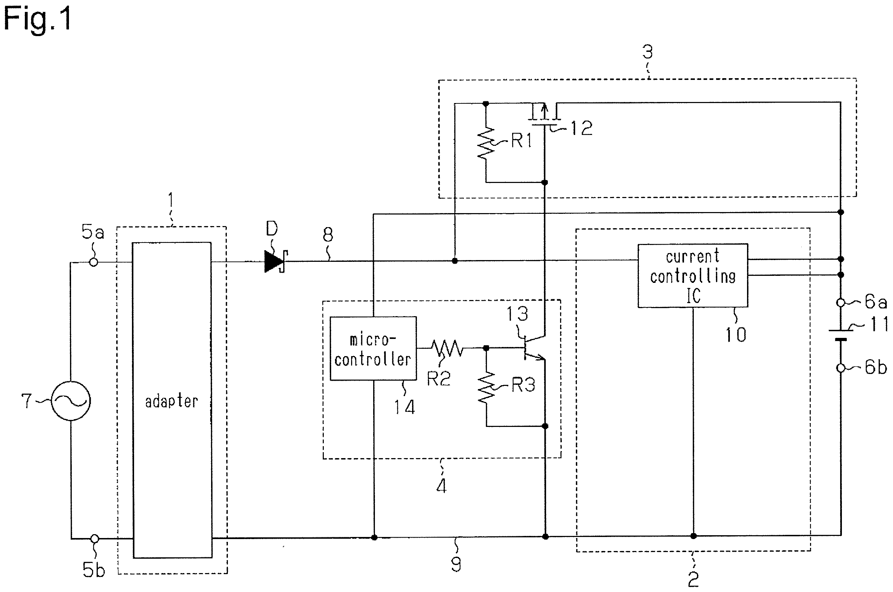

One embodiment of a charging apparatus according to the present invention will now be described with reference to Fig. 1.

As shown in Fig. 1, a charging apparatus includes a large-current charging circuit 1, a small-current charging circuit 2, a switch unit 3, and a line switching controller 4. The large-current charging circuit 1 and the small-current charging circuit 2 are connected in series between two power terminals 5a and 5b and two charging terminals 6a and 6b.

More specifically, the large-current charging circuit 1 includes an adapter having a transformer (not shown). A primary coil of the transformer is connected to an alternating current power supply 7 through the two power terminals 5a and 5b.

A secondary coil of the transformer includes a first terminal, which is connected to the small-current charging circuit 2 by a high-potential wire 8 and a Schottky diode D, and a second terminal, which is connected to the small-current charging circuit 2 and the low-potential charging terminal 6b by a low-potential wire 9.

The small-current charging circuit 2 includes a current controlling IC 10. The current controlling IC 10 is connected to the high-potential charging terminal 6a by the high-potential wire 8. The current controlling IC 10 is connected to the low-potential charging terminal 6b by the low-potential wire 9. The current controlling IC 10 converts a large charging current received from the large-current charging circuit 1 to a small charging current to supply the charging current to the two charging terminals 6a and 6b. Also, the current controlling IC 10 detects the voltage of a storage battery 11, which is connected to the two charging terminals 6a and 6b, and variably controls the charging current in a non-stepped (linear) manner in accordance with a detected voltage. More specifically, the current controlling IC 10 supplies the two charging terminals 6a and 6b and, ultimately, the storage battery 11 with a smaller charging current as the detected voltage increases.

The large-current charging circuit 1 is connected to the charging terminal 6a by the switch unit 3. The switch unit 3 includes a p-channel field-effect transistor (FET) 12, which serves as a switching element.

More specifically, the cathode of the Schottky diode D is connected to the small-current charging circuit 2 by the high-potential wire 8. A connection point of the Schottky diode D and the small-current charging circuit 2 is connected to the high-potential charging terminal 6a by the FET 12. A resistor R1 is connected between the gate and the source of the FET 12. The gate of the FET 12 is connected to the low-potential wire 9 (charging terminal 6b) by a transistor 13, which will be described later.

The line switching controller 4 includes an NPN-type transistor 13 and a microcontroller 14. The line switching controller 4 detects the voltage of the storage battery 11. The line switching controller 4 activates the FET 12 when the detected voltage is smaller than a predetermined value, and deactivates the FET 12 when the detected voltage is larger than or equal to the predetermined value.

More specifically, the microcontroller 14 is connected to the two charging terminals 6a and 6b and also connected to the base of the transistor 13 by a resistor R2. The microcontroller 14 detects the voltage of the storage battery 11. The microcontroller 14 supplies a base current to the transistor 13, only when the detected voltage is smaller than the predetermined value, to activate the transistor 13 in order to activate the FET 12. A resistor R3 is connected between the base and the emitter of the transistor 13.

The operation of the charging apparatus will now be described.

For example, the storage battery 11 having an extremely low state of charge is connected to the two charging terminals 6a and 6b. When determining that the voltage of the storage battery 11 is smaller than the predetermined value, the microcontroller 14 supplies the base current to the transistor 13. This activates the transistor 13, which, in turn, activates the FET 12.

Then, the large-current charging circuit 1 directly supplies the storage battery 11 with a large charging current through the FET 12 (without the current flowing through the small-current charging circuit 2). Thus, the storage battery 11 is charged with a large charging current.

For example, the storage battery 11 having a relatively large state of charge may be connected to the two charging terminals 6a and 6b, or a predetermined time may elapse after the storage battery 11 is charged with a large charging current as described above. In such a case, when determining that the voltage of the storage battery 11 is larger than or equal to the predetermined value, the microcontroller 14 stops supplying the base current to the transistor 13. This deactivates the transistor 13, which, in turn, activates the FET 12.

Then, the current controlling IC 10 converts a large charging current received from the large-current charging circuit 1 to a small charging current (i.e., the current controlling IC 10 uses the output of the large-current charging circuit 1 as a power supply) to supply the small charging current to the storage battery 11. Thus, the storage battery 11 is charged with a small charging current. In this case, the current controlling IC 10 detects the voltage of the storage battery 11 and variably controls the charging current in a non-stepped manner in accordance with the detected voltage. More specifically, the current controlling IC 10 supplies the storage battery 11 with a smaller charging current as the detected voltage of the storage battery 11 increases.

Accordingly, the above embodiment has the advantages described below.
(1) The large-current charging circuit 1 and the small-current charging circuit 2, which are connected in series, are arranged between the two power terminals 5a and 5b and the two charging terminals 6a and 6b. The large-current charging circuit 1 and the charging terminal 6a are connected by the FET 12, which functions as a switching element. Thus, for example, when the FET 12 is activated, the storage battery 11 is directly charged with a large charging current from the large-current charging circuit 1. In contrast, when the FET 12 is deactivated, the storage battery 11 is charged with a small charging current through the small-current charging circuit 2. In such a structure, the large-current charging circuit 1 only needs to use a general transformer (including one secondary coil). Thus, the charging apparatus may be reduced in size and have a simplified structure.
(2) The line switching controller 4 is arranged to detect the voltage of the storage battery 11. The line switching controller 4 activates the FET 12 when the detected voltage is smaller than the predetermined value, and deactivates the FET 12 when the detected voltage is larger than or equal to the predetermined value. Thus, optimal charging may be performed as compared to when a switching element (FET 12) is simply controlled in accordance with the time elapsed from when charging is started. That is, when the voltage of the storage battery 11 is small, the storage battery 11 is directly charged with a large charging current from the large-current charging circuit 1 regardless of the state of charge of the storage battery 11 when charging is started. In contrast, when the voltage of the storage battery 11 is large, the storage battery 11 is charged with a small charging current through the small-current charging circuit 2. This allows for quick charging to be performed automatically and accurately while preventing overcharging.
(3) The small-current charging circuit 2, which detects the voltage of the storage battery 11, includes the current controlling IC 10, which variably controls the charging current in a non-stepped manner in accordance with the detected voltage. Thus, the storage battery 11 may be charged in a further optimal manner in comparison to when the storage battery 11 is charged with a constant and small charging current. For example, the use of the (current controlling) IC simplifies the circuit configuration without combining a plurality of elements.

The above embodiment may be modified as follows.

In the above embodiment, the small-current charging circuit 2 includes the current controlling IC 10. However, a different structure may be used as long as it has the same function.

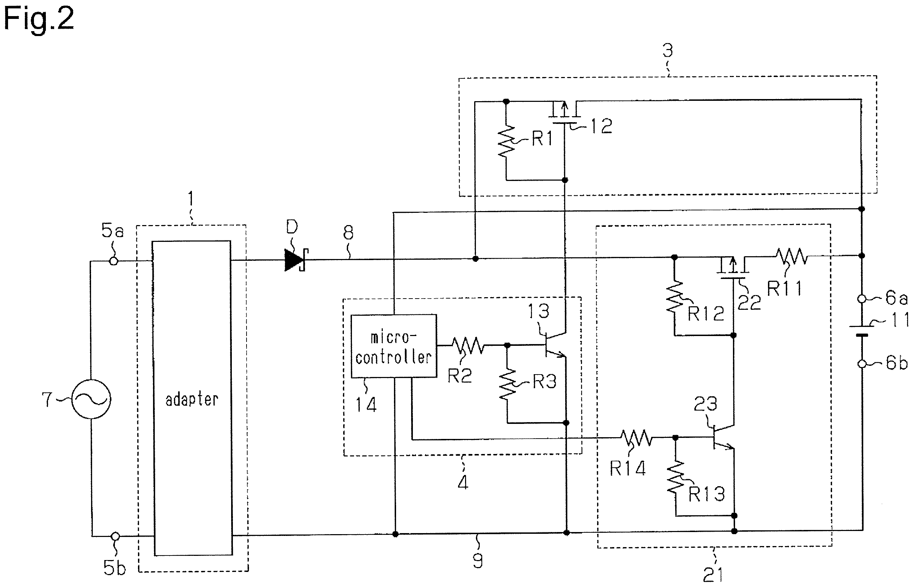

One modified example is shown in Fig. 2. In this example, in lieu of the current controlling IC 10 (refer to Fig. 1) of the above embodiment, a small-current charging circuit 21 includes a resistor R11 connected between the large-current charging circuit 1 and the charging terminal 6a, a p-channel field-effect transistor (FET) 22 serving as a small-current switching element, and an NPN-type transistor 23 used to control the FET 22.

More specifically, the high-potential wire 8 is connected to the high-potential charging terminal 6a by the FET 22 and the resistor R11. A resistor R12 is connected between the gate and the source of the FET 22. The gate of the FET 22 is connected to the low-potential wire 9 (charging terminal 6b) through the transistor 23. A transistor R13 is connected between the base and the emitter of the transistor 23.

In this example, the microcontroller 14 is connected to the base of the transistor 23 through a transistor R14. In addition to the operation of the above embodiment, the microcontroller 14 of this example supplies the base current to the transistor 23 to activate the transistor 23, which, in turn, activates the FET 22, only when the detected voltage of the storage battery 11 is larger than or equal to the predetermined value. The microcontroller 14 of this example PWM-controls the FET 22 based on the detected voltage of the storage battery 11 to variably control the charging current in a non-stepped manner. More specifically, as the detected voltage increases, the microcontroller 14 uses a smaller duty ratio to activate the FET 22 so that the storage battery 11 is charged with a small charging current.

This example obtains substantially the same advantages as (1) and (2) of the above embodiment.

The small-current charging circuit 21 includes the resistor R1 connected between the large-current charging circuit 1 and the charging terminal 6a. Thus, a simple structure may be used to convert the large-current supplied from the large-current charging circuit 1 to a small charging current.

The small-current charging circuit 21 includes the FET 22 connected between the large-current charging circuit 1 and the charging terminal 6a. The microcontroller 14, which is a component of the line switching controller 4, PWM-controls the FET 22 to variably control the charging current (small current) in a non-stepped manner. Thus, the storage battery 11 may be charged in a further optimal manner as compared to when the storage battery 11 is charged with a constant small charging current. The cost may be reduced as compared to, for example, a structure using the dedicated current controlling IC 10 (refer to Fig. 1) to obtain the same advantages.

The above embodiment includes the line switching controller 4 that activates the FET 12 (switching element) when the detected voltage of the storage battery 11 is smaller than the predetermined value, and deactivates the FET 12 when the detected voltage of the storage battery 11 is larger than or equal to the predetermined value. However, the configuration is not limited in such a manner and may be changed so that the FET 12 (switching element) is controlled by a different means.

For example, the configuration may be changed to include a controller that controls the switching element (FET 12) in accordance with the time elapsed from when charging is started. For example, the configuration may be changed to allow a user to freely select and control the switching element (FET 12).

In the above embodiment, the small-current charging circuit 2 (21) can variably control the charging current in a non-stepped manner in accordance with the detected voltage of the storage battery 11. The configuration is not limited in such a manner and may be changed to, for example, a small-current charging circuit that charges the storage battery 11 with a charging current of a constant small current value. For example, the small-current charging circuit 2 (21) may be modified to variably control the charging current in a plurality of steps in accordance with the detected voltage of the storage battery 11.

The above embodiment uses the FET 12 as the switching element, however, it may be changed to use a different switching element that has the same function.

## Claims

1. A charging apparatus comprising:
two charging terminals (6a, 6b) configured to be connected to a storage battery (11);
a large-current charging circuit (1) configured to generate a first charging current;
a small-current charging circuit (2) configured to generate a second charging current that is smaller than the first charging current;
a switching element (12) selectively connecting the large-current charging circuit (1) to one of the two charging terminals (6a, 6b); and
a power terminal (5a, 5b); wherein
the large-current charging circuit (1) and the small-current charging circuit (2) are connected in cascade between the power terminal (5a, 5b) and the charging terminal (6a, 6b);
**characterized in that**
the switching element (12) is a p-channel field-effect transistor and is connected to the small-current charging circuit (2) in parallel;
the small-current charging circuit (2) is adapted to variably control the second charging current in a linear manner or in a plurality of steps in accordance with the voltage of the storage battery; and
the charging apparatus further comprises a line switching controller (4) adapted to detect a voltage of the storage battery (11), wherein the line switching controller (4) includes including an NPN-type transistor (13) and a microcontroller (14); wherein
a resistor (R1) is connected between a gate and a source of the p-channel field-effect transistor (12);
an emitter of the NPN-type transistor (13) is connected to the other of the two charging terminals (6a, 6b);
a collector of the NPN-type transistor (13) is connected to the gate of the p-channel field-effect transistor (12); and
the microcontroller (14) is connected to the two charging terminals (6a, 6b) and is adapted to activate the NPN-type transistor (13) to activate the p-channel field-effect transistor (12) when a detected voltage is smaller than a predetermined value, and to deactivate the NPN-type transistor (13) to deactivate the p-channel field-effect transistor (12) when the detected voltage is larger than or equal to the predetermined value.

2. The charging apparatus according to claim 1, wherein the small-current charging circuit (2) includes a current controlling IC (10) that is adapted to detect the voltage of the storage battery (11) and to variably control the second charging current in a linear manner or in a plurality of steps in accordance with a detected voltage.

3. The charging apparatus according to claim 1, wherein the small-current charging circuit (2) includes a resistor (R11) connected between the large-current charging circuit (1) and one of the charging terminals (6a, 6b).

4. The charging apparatus according to claim 3, wherein
the small-current charging circuit (2) includes a small-current switching element (22) connected between the large-current charging circuit (1) and one of the charging terminals (6a, 6b); and
the line switching controller (4) is adapted to PWM-control the small-current switching element (22) to vary the second charging current in a linear manner or in a plurality of steps.

## Patentansprüche

1. Ladevorrichtung, die umfasst:
zwei Ladeanschlüsse (6a, 6b), die zum Verbinden mit einer Speicherbatterie (11) ausgeführt sind;
eine Starkstrom-Ladeschaltung (1), die zum Erzeugen eines ersten Ladestroms ausgeführt ist;
eine Schwachstrom-Ladeschaltung (2), die zum Erzeugen eines zweiten Ladestroms ausgeführt ist, der schwächer ist als der erste Ladestrom;
ein Schaltelement (12), das die Starkstrom-Ladeschaltung (1) selektiv mit einem der zwei Ladeanschlüsse (6a, 6b) verbindet; sowie
einen Stromanschluss (5a, 5b); wobei
die Starkstrom-Ladeschaltung (1) und die Schwachstrom-Ladeschaltung (2) in Kaskade zwischen den Stromanschluss (5a, 5b) und den Ladeanschluss (6a, 6b) geschaltet sind;
**dadurch gekennzeichnet, dass**
das Schaltelement (12) ein p-Kanal-Feldeffekttransistor ist und parallel mit der Schwachstrom-Ladeschaltung (2) verbunden ist;
die Schwachstrom-Ladeschaltung (2) so eingerichtet ist, dass sie den zweiten Ladestrom linear oder in mehreren Schritten entsprechend der Spannung der Speicherbatterie variabel steuert; und
die Ladevorrichtung des Weiteren eine Leitungsschalt-Steuerungseinrichtung (4) umfasst, die so eingerichtet ist, dass sie eine Spannung der Speicherbatterie (11) erfasst, wobei die Leitungsschalt-Steuerungseinrichtung (4) einen npn-Transistor (13) sowie einen Mikrocontroller (14) enthält; wobei
ein Widerstand (R1) zwischen ein Gate und eine Source des p-Kanal-Feldeffekttransistors (12) geschaltet ist;
ein Emitter des npn-Transistors (13) mit dem anderen der zwei Ladeanschlüsse (6a, 6b) verbunden ist;
ein Kollektor des npn-Transistors (13) mit dem Gate des p-Kanal-Feldeffekttransistors (12) verbunden ist; und
der Mikrocontroller (14) mit den zwei Ladeanschlüssen (6a, 6b) verbunden und so eingerichtet ist, dass er den npn-Transistor (13) aktiviert, um den p-Kanal-Feldeffekttransistor (12) zu aktivieren, wenn eine erfasste Spannung niedriger ist als ein vorgegebener Wert, und den npn-Transistor (13) deaktiviert, um den p-Kanal-Feldeffekttransistor (12) zu deaktivieren, wenn die erfasste Spannung höher ist als oder genauso groß wie der vorgegebene Wert.

2. Ladevorrichtung nach Anspruch 1, wobei die Schwachstrom-Ladeschaltung (2) einen Stromregelungs-IC (10) einschließt, der so eingerichtet ist, dass er die Spannung der Speicherbatterie (11) erfasst und den zweiten Ladestrom entsprechend einer erfassten Spannung linear oder in mehreren Schritten variabel steuert.

3. Ladevorrichtung nach Anspruch 1, wobei die Schwachstrom-Ladeschaltung (2) einen Widerstand (R11) einschließt, der zwischen die Starkstrom-Ladeschaltung (1) und einen der Ladeanschlüsse (6a, 6b) geschaltet ist.

4. Ladevorrichtung nach Anspruch 3, wobei
die Schwachstrom-Ladeschaltung (2) ein Schwachstrom-Schaltelement (22) einschließt, das zwischen die Starkstrom-Ladeschaltung (1) und einen der Ladeanschlüsse (6a, 6b) geschaltet ist; und
die Leitungsschalt-Steuerungseinrichtung (4) so eingerichtet ist, dass sie PWM-Steuerung des Schwachstrom-Schaltelementes (22) durchführt, um den zweiten Ladestrom linear oder in mehreren Schritten zu ändern.

## Revendications

1. Appareil de charge comprenant:
deux bornes de charge (6a, 6b) configurées pour être connectées à une batterie de stockage (11);
un circuit de charge à grand courant (1) configuré pour générer un premier courant de charge;
un circuit de charge à faible courant (2) configuré pour générer un second courant de charge qui est inférieur au premier courant de charge;
un élément de commutation (12) connectant sélectivement le circuit de charge à courant fort (1) à l'une des deux bornes de charge (6a, 6b); et
une borne de puissance (5a, 5b); dans lequel
le circuit de charge à courant fort (1) et le circuit de charge à courant faible (2) sont connectés en cascade entre la borne de puissance (5a, 5b) et la borne de charge (6a, 6b);
**caractérisé en ce que**
l'élément de commutation (12) est un transistor à effet de champ à canal p et est connecté en parallèle au circuit de charge à faible courant (2);
le circuit de charge à faible courant (2) est conçu pour commander de manière variable le second courant de charge d'une manière linéaire ou en plusieurs étapes en fonction de la tension de la batterie de stockage; et
l'appareil de charge comprend en outre un dispositif de commande de commutation de ligne (4) conçu pour détecter une tension de la batterie de stockage (11), dans lequel le dispositif de commande de commutation de ligne (4) comprend un transistor de type NPN (13) et un microdispositif de commande (14); dans lequel
une résistance (R1) est connectée entre une grille et une source du transistor à effet de champ à canal p (12);
un émetteur du transistor de type NPN (13) est connecté à l'autre des deux bornes de charge (6a, 6b);
un collecteur du transistor de type NPN (13) est connecté à la grille du transistor à effet de champ à canal p (12); et
le microdispositif de commande (14) est connecté aux deux bornes de charge (6a, 6b) et est conçu pour activer le transistor de type NPN (13) pour activer le transistor à effet de champ à canal p (12) lorsqu'une tension détectée est inférieure à une valeur prédéterminée, et pour désactiver le transistor de type NPN (13) pour désactiver le transistor à effet de champ à canal P (12) lorsque la tension détectée est supérieure ou égale à la valeur prédéterminée.

2. Appareil de charge selon la revendication 1, dans lequel le circuit de charge à faible courant (2) comprend un circuit intégré de commande de courant (10) qui est conçu pour détecter la tension de la batterie de stockage (11) et pour commander de manière variable le second courant de charge de manière linéaire ou en plusieurs étapes selon une tension détectée.

3. Appareil de charge selon la revendication 1, dans lequel le circuit de charge à faible courant (2) comprend une résistance (R11) connectée entre le circuit de charge à fort courant (1) et une des bornes de charge (6a, 6b).

4. Appareil de charge selon la revendication 3, dans lequel:
le circuit de charge à faible courant (2) comprend un élément de commutation à faible courant (22) connecté entre le circuit de charge à fort courant (1) et une des bornes de charge (6a, 6b); et
le dispositif de commande de commutation de ligne (4) est conçu pour commander par PWM l'élément de commutation de faible courant (22) pour faire varier le second courant de charge d'une manière linéaire ou en plusieurs étapes.
